# EUROPÄISCHE PATENTSCHRIFT

(11) **EP 1 171 945 B1**
(45) Veröffentlichungstag und Bekanntmachung des Hinweises auf die Patenterteilung: **30.03.2016**
(21) Anmeldenummer: 01907382.4
(22) Anmeldetag: 22.01.2001
(51) Int. Cl.: H02K 15/06

(54) **VERFAHREN ZUR HERSTELLUNG EINES MAGNETISCH ERREGBAREN KERNS MIT KERNWICKLUNG FÜR EINE ELEKTRISCHE MASCHINE**
METHOD FOR PRODUCING A MAGNETICALLY EXCITABLE CORE COMPRISING A CORE WINDING FOR AN ELECTRIC MACHINE
PROCÉDÉ DE PRODUCTION D'UN NOYAU À EXCITATION MAGNETIQUE COMPRENANT UN ENROULEMENT DE NOYAU, DESTINÉ À UNE MACHINE ÉLECTRIQUE

(30) Priorität: 20.01.2000 DE 10002385
(43) Veröffentlichungstag der Anmeldung: 16.01.2002
(73) Patentinhaber: ROBERT BOSCH GMBH, 70442 Stuttgart (DE)
(72) Erfinder: KREUZER, Helmut, 71701 Schwieberdingen (DE); RAU, Eberhard, 70825 Korntal-Muenchingen (DE); WILLMOTT, Adam, Swansen SAZ 9LY (GB); FUSSEY, Alan, 06 More by Sea CF 32 01E (GB); NEIL, Williams, Bridgend CF34 05D (GB); HENNE, Martin, 71696 Moeglingen (DE); PFLUEGER, Klaus, 71735 Eberdingen (DE)
(86) Internationale Anmeldenummer: PCT/DE2001/000244
(87) Internationale Veröffentlichungsnummer: WO 2001/054254

(56) Entgegenhaltungen:
- WO-A-98/48500
- DE-A- 3 803 752
- US-A- 4 543 708
- US-A- 4 571 822
- US-A- 5 787 567
- PATENT ABSTRACTS OF JAPAN vol. 1997, no. 8, 29. August 1997 (1997-08-29) -& JP 09 103052 A (MITSUBISHI ELECTRIC CORP), 15. April 1997 (1997-04-15) in der Anmeldung erwähnt
- PATENT ABSTRACTS OF JAPAN vol. 199, no. 4, 30. April 1999 (1999-04-30) -& JP 11 018378 A (DENSO CORP), 22. Januar 1999 (1999-01-22)
- PATENT ABSTRACTS OF JAPAN vol. 12, no. 425 (E-681), 10. November 1988 (1988-11-10) -& JP 63 161845 A (NIPPON DENSO CO LTD), 5. Juli 1988 (1988-07-05)

## Beschreibung

### Stand der Technik

Aus der japanischen Offenlegungsschrift 9-103 052 ist ein Herstellungsverfahren für den Ständer einer elektrischen Maschine nach dem Oberbegriff des Anspruchs 1 bereits bekannt.

Zur Herstellung dieses Ständers werden zunächst einzelne Blechlamellen ausgestanzt und eine bestimmte Anzahl dieser Blechlamellen einander deckend bis zur gewünschten axialen Breite des Kerns geschichtet. Diese geschichteten Blechlamellen bilden den Ständerkern, der damit auf einer Seite für einen Ständer übliche zueinander parallel ausgerichtete Zähne und Nuten aufweist. Eine bereits vorgewickelte, als verteilte Wellenwicklung ausgeführte Kernwicklung liegt in etwa in ebener Form vor und wird in die Nuten des im wesentlichen flachen Kerns anschließend eingelegt. Die flache Baugruppe aus Kern und Kernwicklung weist einen sogenannten Wicklungsüberhang auf, das heißt jede einzelne von insgesamt drei Phasen hat eine Wicklungsseite, die zunächst nicht in Nuten eingelegt ist. Diese Baugruppe aus Kern und Kernwicklung wird anschließend so rund gebogen, daß ein üblicher hohlzylindrischer Ständer entsteht. Dabei müssen die überhängenden Wicklungsseiten vor der Fertigstellung des Ständers in die entsprechenden Nuten abschließend eingelegt werden.

Durch seine Herstellung bedingt, weist der Kern zwei Enden auf, die beim Rundbiegen des Kern mit Kernwicklung bündig aneinander zu legen sind. Diese beiden Enden sind geometrisch in den Nutgrund einer Kernnut gelegt.

Bei diesem Stand der Technik ist nachteilig, daß trotz des guten Zugangs zu den Nuten der Füllungsgrad nicht optimal ist.

### Vorteile der Erfindung

Der Erfindung liegt die Erkenntnis zu Grunde, daß die vor dem Rundbiegen des Lamellenpakets aufgeweiteten Nuten so zu füllen sind, daß die eingelegte Wicklung bereits vor dem Rundbiegen zumindest in etwa der Form der Nuten nach dem Rundbiegen entspricht, wobei eine gewisse Pressung innerhalb der eingelegten Wicklung durchaus erwünscht ist.

Die gestellte Aufgabe wird durch die Merkmale der unabhängigen Ansprüche 1 und 13 gelöst.

Nach dem erfindungsgemäßen Verfahren zum Herstellen eines Kerns für eine elektrische Maschine ist deshalb vorgesehen, daß alle Wicklungsseiten der Kernwicklung, bevor sie in die Nuten des Kerns eingelegt werden, in einem Werkzeug in eine Nutform gepreßt und umgeformt werden. Dies ist eine sehr vorteilhafte Maßnahme, weil damit verhältnismäßig hohe Nutfüllfaktoren von 55 % und mehr erreicht werden. Es wird dadurch verhindert, daß die vormontierte Baugruppe aus flachem Kern und Kernwicklung beim Rundbiegen in die hohlzylindrische Form die Verformungsarbeit aufnehmen muß und dadurch der Kern unzulässig verformt wird.

Durch die in den Unteransprüchen aufgeführten Maßnahmen ergeben sich vorteilhafte Weiterbildungen und Verbesserungen des Verfahrens nach dem Hauptanspruch.

In einer weiteren Ausgestaltung der Erfindung ist vorgesehen, daß an beiden, in einem späteren Schritt miteinander zu verbindenden Enden des Kerns jeweils in Umfangsrichtung ein halber Zahn ausgebildet wird, das heißt, daß die Stoßkanten des Lamellenpakets nicht wie bekannt in einer Nut liegen, sondern innerhalb eines die Nuten einrahmenden Zahns. Durch diese Maßnahme wird zwar das Verbinden der Stoßkanten erschwert, wird jedoch eine Spule mit Wicklungsüberhang in den Kern eingelegt, so muß dieser Wicklungsüberhang kurz vor dem Abschluß des Rundbiegens des Kerns beziehungsweise des Ständers in eine Nut eingelegt werden. Ist nun diese Nut bereits fertig gebildet, besteht keine Gefahr, daß diese Wicklungsseite des Wicklungsüberhangs zwischen den beiden Enden an den Stoßkanten eingeklemmt wird. Eine Zerstörung dieser letzten einzulegenden Wicklungsseite, insbesondere bei schnell laufendem Fertigungsprozeß, wird auf einfache Weise sicher verhindert. Außerdem wird vermieden, daß eine um die letzte einzulegende Wicklungsseite gelegte Nutisolation beim Einlegen der Wicklungsseite von dieser herunterrutscht und der Fertigungsprozeß dadurch zumindest nicht behindert wird. Ein weiterer Vorteil eines je halb ausgebildeten Zahns liegt darin, daß der magnetische Widerstand im magnetischen Rückschluß des Ständerkerns nicht unterbrochen ist und somit magnetische Verluste verringert sind.

Wird die Kernwicklung angefertigt, nehmen die einzelnen Spulen- oder Schleifenseiten einen Hüllraum ein, der in der Regel größer ist als der eigentliche Nutraum nach dem Rundbiegen des Kerns. Preßt man die Wicklungsseiten vor dem Einlegen in den Kern jeweils in eine Nutform eines Werkzeugs, die einer Endform der Nut des Kerns entspricht, werden die Wicklungsseiten verformt und der Hüllraum der Wicklungsseiten dem eigentlichen Nutraum nach dem Rundbiegen des Ständers beziehungsweise Kerns angepaßt. Es wird dadurch vermieden, daß beim Rundbiegen des Ständers, das heißt des Kerns mit der Kernwicklung, die einzelnen Zähne des Kerns auf die Wicklungsseiten Verformungskräfte ausüben und dadurch möglicherweise selbst verbogen werden, was den Kern möglicherweise zerstören würde. Berücksichtigt man bei der Nutform des Werkzeugs zumindest einen Anteil der Dicke einer Isolierschicht indem man die Nutform des Werkzeugs um einen solchen Anteil am Umfang der Nutform verkleinert, werden die Wicklungsseiten allenfalls durch die Isolierschicht zwischen zwei Zähnen leicht gepreßt. Die Wicklungsseiten beziehungsweise die Kernwicklung wird dadurch in ihrer Lage leicht dämpfend gehalten, mögliche Schwingungen der Wicklungsseiten gedämpft und ein Abscheuern einer Lackschicht auf den Spulendrähten und schließlich ein möglicher Kurzschluß vermieden. Insbesondere bei Berücksichtigung der ganzen Dicke der Isolierschicht, indem die Nutform des Werkzeugs um die ganze Dicke der Isolierschicht kleiner ist als die Nutform der Kernnuten, bleibt die Isolierschicht unbeschädigt.

Wickelt man eine Kernwicklung mit einem sogenannten Wicklungsüberhang, so erreicht man einen weitestgehend symmetrischen Aufbau beider Wickelköpfe auf beiden Seiten des Ständerkerns. Die Wickelköpfe haben dann insbesondere im Bereich der Stoßstelle keine in etwa keilförmige Aussparung, die eine Durchlaßöffnung darstellt und beim Durchströmen mit Luft zu einem höheren Geräuschniveau führen könnte. Der durch den Wicklungsüberhang erreichte symmetrische Aufbau der Wickelköpfe führt weiterhin dazu, daß der Biegewiderstand der Baugruppe, die aus dem Kern und der Kernwicklung gebildet ist, über die Länge beziehungsweise den Umfang des Ständers weitestgehend konstant ist. Die fertige und in eine Zylinderringform gebogene Baugruppe aus Kern und Kernwicklung weist dadurch eine besonders gute Rundheit auf.

Weist die Kernwicklung zumindest eine überhängende Wicklungsseite auf, und ist der Abstand zwischen dieser zumindest einen überhängenden Wicklungsseite zur nächstliegenden nicht überhängenden Wicklüngsseite größer als der Abstand zwischen zwei benachbarten Nuten, so ist das Einführen der überhängenden Wicklungsseite vor dem Abschluß des Rundbiegens des Kerns in die erste Nut erleichtert, Zugbelastungen zwischen der überhängenden Wicklungsseite und der letzten sich in der letzten Nut befindenden Wicklungsseite werden vermieden. Hebt man die zumindest eine überhängende Wicklungsseite beim Pressen der Wicklungsseiten in die Nutform aus der Ebene heraus, die die nicht überhängenden Wicklungsseiten bestimmen, so wird beim Rundbiegen und schließlich Einlegen der überhängenden Spulen vermieden, daß die Wicklungsseiten mit dem Ende des Kerns kollidieren und möglicherweise beschädigt werden.

Eine als zweischichtige Schleifenwicklung ausgeführte Kernwicklung hat den Vorteil, daß jede Schleife einer Phasenwicklung einerseits Drähte am Innenumfang und damit im Zahnkopfbereich aufweist und andererseits Drähte im Bereich des Nutgrunds hat. Da die Kühlung der Wickelköpfe in der Regel am Innenumfang besser ist als am Außenumfang, wird dadurch eine letztlich gleichmäßige Kühlung einer Schleife und damit auch einer ganzen Phasenwicklung erreicht. Damit ist nicht nur eine Phasenwicklung gleichmäßig gekühlt, sondern auch die ganze Kernwicklung. Jede einzelne Phasenwicklung kann auf die gleiche Last ausgelegt werden.

Führt man die Kernwicklung als einfache einschichtige Schleifenwicklung aus, weist die Kernwicklung keine überhängenden Wicklungsseiten auf, sind beim Rundbiegen der Baugruppe aus Kern und Kernwicklung keine überhängenden Wicklungsseiten einzufügen und der Rundbiegeprozeß in die Ringzylinderform kann ohne überhängende Wicklungsseiten einfach und problemlos durchgeführt werden.

In einer weiteren Ausgestaltung der Erfindung ist vorgesehen, den zur Verfügung gestellten Kern vor dem Einlegen der Kernwicklung in die Nuten über seinen Kernrücken, das heißt über die nicht genutete Seite um einen gewissen Betrag vorzubiegen, so daß die Nutöffnungen zum Einlegen der Wicklungsseiten erweitert werden. Durch diesen Verfahrensschritt ist es möglich, bei sehr kleinen Nutöffnungen des noch flachen Kerns Wicklungen mit Wicklungsseiten, die breiter sind als die Nutöffnung, in den Kern einzulegen. Dies ermöglicht verhältnismäßig breite Ausführungen der Zahnköpfe und damit einen sehr guten Übergang des Magnetfeldes von einem Läufer auf den Kern zu verwirklichen, was den Wirkungsgrad erheblich verbessert. Durch diesen Verfahrensschritt ist es auch möglich Drähte zu verwenden deren kleinste Abmessung im Querschnitt größer ist als die Breite der Nutöffnung im noch flachen Zustand des Ständerkerns, sowie Drähte, die einen nicht-runden Querschnitt aufweisen

Wird der Wicklungsüberhang vor dem Abschluß des Biegens des Kerns in die Zylinderringform in die zumindest eine Nut eingelegt und erst dann fertiggebogen, ist die Nutöffnung breiter als beim fertig gebogenen Kern, wodurch sich das Einlegen des Wicklungsüberhangs vereinfacht.

Damit sich der in die Zylinderringform gebogene Kern nicht mehr um den elastischen Anteil der Biegung zurückverformt, ist vorgesehen, die Enden des Kerns miteinander stoffschlüssig zu verbinden.

### Zeichnungen

Die Erfindung wird nachfolgend in Ausführungsbeispielen anhand der zugehörigen Zeichnungen näher erläutert. Es zeigen:
Figur 1 zeigt den Verfahrensablauf zur Herstellung des erfindungsgemäßen Kerns mit Kernwicklung,
Figur 2 eine Seitenansicht eines Kerns in Quaderform und eine Draufsicht auf eine Kernwicklung mit den Kernwicklungsanschlüssen sowie deren Zuordnung zu Nuten des Kerns,
Figur 3 eine räumliche Darstellung einer Phase einer zweischichtigen Schleifenwicklung,
Figur 4 eine schematische Zusammenschau aller drei Phasen der Kernwicklung, gebildet aus einer zweischichtigen Schleifenwicklung gemäß Figur 3,
Figur 5 zeigt Einzelheiten eines Wicklungsüberhangs der Wicklung aus Figur 4,
Figur 6A einen Querschnitt einer Wicklungsseite unmittelbar nach dem Wickeln,
Figur 6B eine Wicklungsseite wie in Figur 6A in einem Preßwerkzeug nach einem Preßvorgang,
Figur 6C und
Figur 6D Details zur Kontur einer Schleifenseite nach dem Pressen,
Figur 7 den Wicklungsüberhang und seine Lage zu den nicht überhängenden nächsten Wicklungsseiten,
Figur 8 einen Querschnitt einer Nut mit einer eingelegten Wicklungsseite vor dem Rundbiegen,
Figur 9 einen Ausschnitt einer Seitenansicht des fast vollständig rundgebogenen Kerns mit einer Hilfsvorrichtung zum Eindrücken der überhängenden Spulen in die Nuten 1 bis 3,
Figur 10 eine Variante der Vorrichtung aus Figur 9 zum Eindrücken der überhängenden Spulen in die Nuten 1 bis 3,
Figur 11 eine Querschnittsansicht einer Nut nach dem Rundbiegen,
Figur 12 ein weiteres Ausführungsbeispiel zum Isolieren einer Wicklungsseite,
Figur 13 einen Ausschnitt einer gemäß Figur 12 isolierten Wicklungsseite in einer Nut,
Figur 14 eine räumliche Ansicht einer einzelnen Phase einer einfachen einschichtigen Schleifenwicklung,
Figur 15 eine Kernwicklung in einem quaderförmigen Kern, gebildet aus einer dreiphasigen einschichtigen einfachen Schleifenwicklung,
Figur 16 ein einfaches Ausführungsbeispiel einer verteilten Wellenwicklung,
Figuren 17A, 17B und 17C ein weiteres Ausführungsbeispiel eines Fertigungsverfahrens,
Figur 18A einen Ausschnitt eines Kerns mit aufgebogener Nut und einer eingelegten Wicklungsseite,
Figur 18B einen Ausschnitt der Nut aus Figur 17A nach dem Rundbiegen des Kerns,
Figur 19A einen Kern mit Kernwicklung nach dem Ende seiner Fertigung,
Figur 19B einen Ausschnitt des Kerns mit Kernwicklung im Bereich der Fügestelle,
Figur 20 eine elektrische Maschine mit einem erfindungsgemäßen Kern mit Kernwicklung.

### Beschreibung der Ausführungsbeispiele

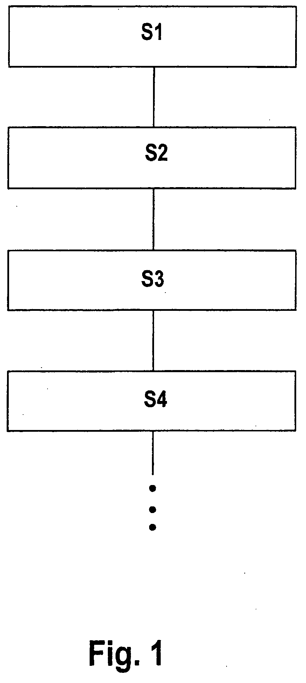

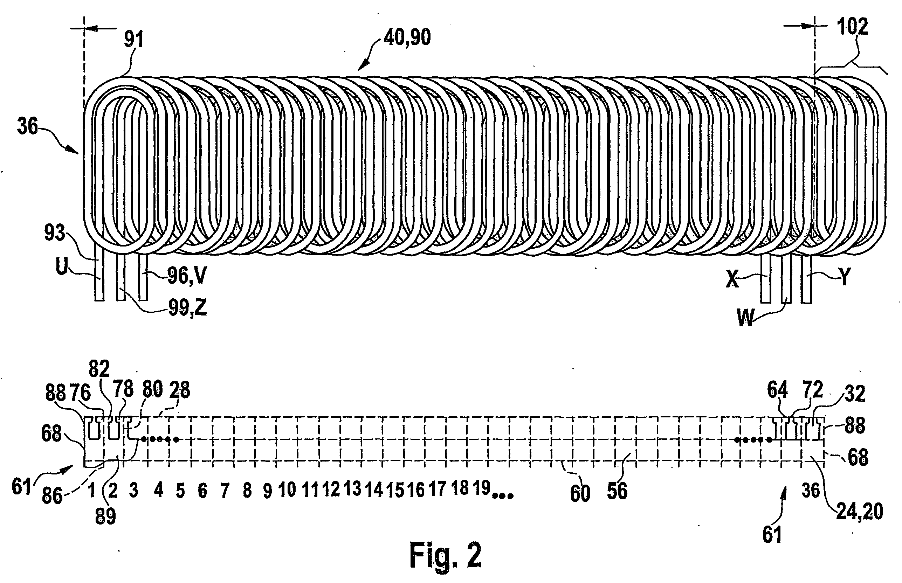

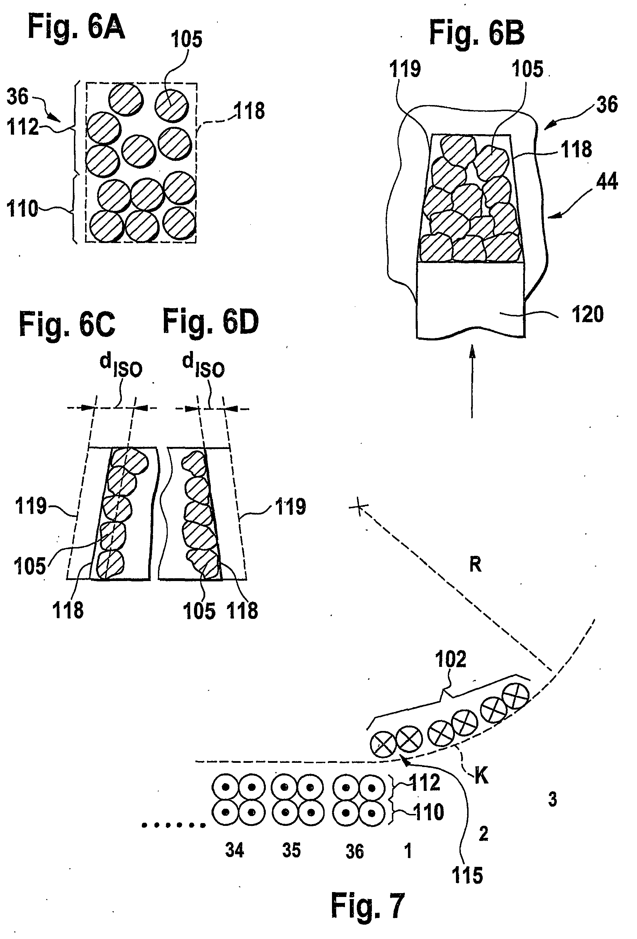

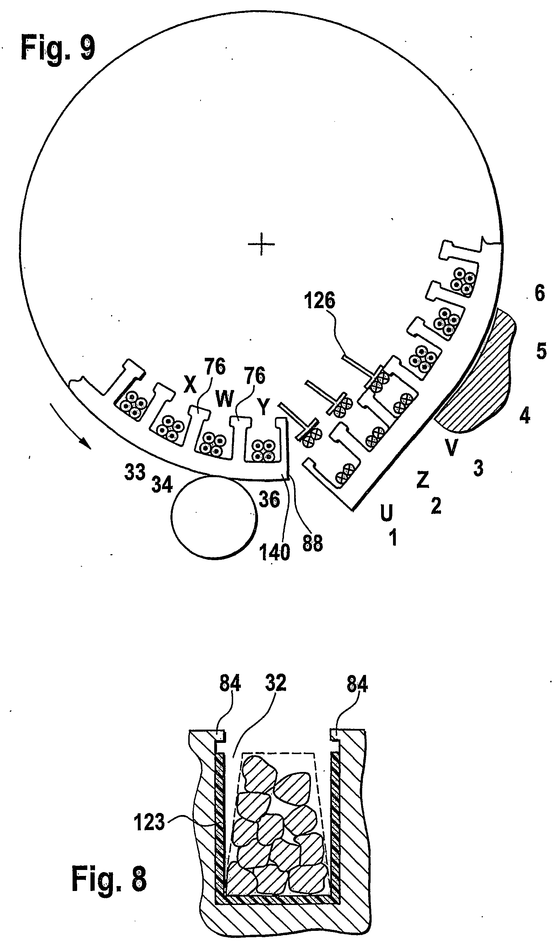

In Figur 1 ist ein schematischer Ablauf des erfindungsgemäßen Verfahrens mit den wesentlichen Schritten dargestellt. In einem Verfahrensschritt S1 wird ein im wesentlichen Quaderform 20 aufweisender magnetisch erregbarer Kern 24 bereitgestellt, siehe auch Figur 2. Der Kern 24 weist auf einer Seite 28 parallel verlaufende Nuten 32 auf.
Eine Kernwicklung 40 hat Nutdrahtabschnitte 105, die später in den Nuten 32 angeordnet werden. Die in den Nuten 32 anzuordnenden und zu einer Gruppe zusammengefassten Nutdrahtabschnitte 105 werden als Wicklungsseiten 36 bezeichnet. Die Wicklungsseiten 36 aufweisende Kernwicklung 40 wird in einem Preßwerkzeug 44 (Figur 6B) so gepreßt, daß die Wicklungsseiten 36 umgeformt werden und dadurch der Kontur einer Nut 32 angepaßt werden, Verfahrensschritt S2. In einem weiteren und nachfolgenden Verfahrensschritt S3 wird die gepreßte Kernwicklung 40 mit ihren Wicklungsseiten 36 in die Nuten 32 des Kerns 24 eingelegt, siehe auch Figur 8. Im Verfahrensschritt S4 wird der Kern 24 samt Kernwicklung 40 in eine Zylinderringform 52 mit nach radial innen gerichteten Nuten 32 umgeformt.

In Figur 2 ist eine Seitenansicht des quaderförmigen Kerns 24 dargestellt. Der Kern 24 hat eine Quaderform 20 mit Stirnflächen 56, die einander abgewandt sind. Die Stirnflächen 56 sind durch eine Rückenfläche 60 und eine Nutfläche 64 miteinander verbunden. Die beiden Stirnflächen 56, die Rückenfläche 60 sowie die Nutfläche 64 bestimmen einen rechteckförmigen Kernquerschnitt; der Kern 24 hat zwei Enden 61, die je eine Endfläche 68 haben. Der Kern 24 hat insgesamt sechsunddreißig Nuten 32, die alle zueinander parallel ausgerichtet sind und in einer gemeinsamen Ebene angeordnet sind. Die Nuten 32 sind alle in die gleiche Richtung geöffnet und enden in Nutöffnungen 72, die alle in der Nutfläche 64 liegen. Die Nuten 32 werden durch parallelflankige Zähne 76 begrenzt. Die Zähne 76 haben einen Zahnkopf 78, der in der Nutfläche 64 endet sowie einen Zahnfuß 80. Die Zahnfüße 80 der Zähne 76 liegen alle in einer Ebene, die parallel zur Rückenfläche 60 angeordnet ist. Die Zähne 76 haben eine Querschnitts- beziehungsweise Profilform 82, so daß sich die Zähne 76 parallel zu den Endflächen 68 erstrecken. Jeder Zahnkopf 78 hat zwei Zahnleisten 84 siehe auch Figur 8, die sich beim in Zylinderringform 52 gebogenen Kern 24 in Umfangsrichtung erstrecken. Jeder Zahn 76 ist symmetrisch zu einer Zahnmittelebene 86 aufgebaut, die parallel zu den Endflächen 68 orientiert ist. Am Kern 24 ist an beiden Endflächen 68 jeweils ein in der Zahnmittelebene 86 halbierter Zahn 88 ausgebildet. Zwischen den beiden halben Zähnen 88 sind fünfunddreißig voll ausgebildete Zähne 76 angeordnet, so daß sich insgesamt sechsunddreißig Nuten 32 und im rundgebogenen Zustand des Kerns 24 sechsunddreißig Zähne 76 ergeben, wobei ein Zahn aus zwei halbierten Zähnen 88 gebildet ist.

Die ganzen Zähne 76 und die halben Zähne 88 sind mit ihrem Zahnfuß 80 mit einem Kernrücken 89 miteinander einstückig verbunden. Der Kernrücken bildet einen magnetischen Rückschluß aller ganzen und halben Zähne 76 und 88.

Über dem Kern 24 ist die Kernwicklung 40 dargestellt, die gegenüber dem Kern 24 um 90 Grad in die Figurenebene eingeklappt dargestellt ist. Die in Figur 2 dargestellte Kernwicklung 40 ist eine dreiphasige zweischichtige Schleifenwicklung 90. Die aus beschichtetem beziehungsweise lackiertem Draht 91 gewickelte dreiphasige Schleifenwicklung 90 besteht aus der ersten Phase 93 mit den Anschlußdrähten U und X, der zweiten Phase 96 mit den Kernwicklungsanschlüssen V und Y sowie der dritten Phase 99 mit den Anschlußdrähten W und Z. Die Schleifenwicklung 90 ist mit ihrem Kernwicklungsanschluß U in eine Nut 32 mit einer Nutnummer 1 eingelegt, der Kernwicklungsanschlußdraht Z ist in eine Nut 32 mit einer Nutnummer 2 und der Kernwicklungsanschlußdraht V in eine Nut 32 mit einer Nutnummer 3 eingelegt. Während die Kernwicklungsanschlüsse U, Z und V sowie X, W und Y sowie alle dazwischen liegenden Wicklungsseiten 36 in die Nuten mit den Nutnummern 1 bis 36 eingelegt werden, weist diese Kernwicklung 40 einen sogenannten Gesamtwicklungsüberhang 102 auf, der beim Einlegen der Kernwicklung 40 in den Kern 24 zunächst nicht in Nuten 32 eingelegt ist.

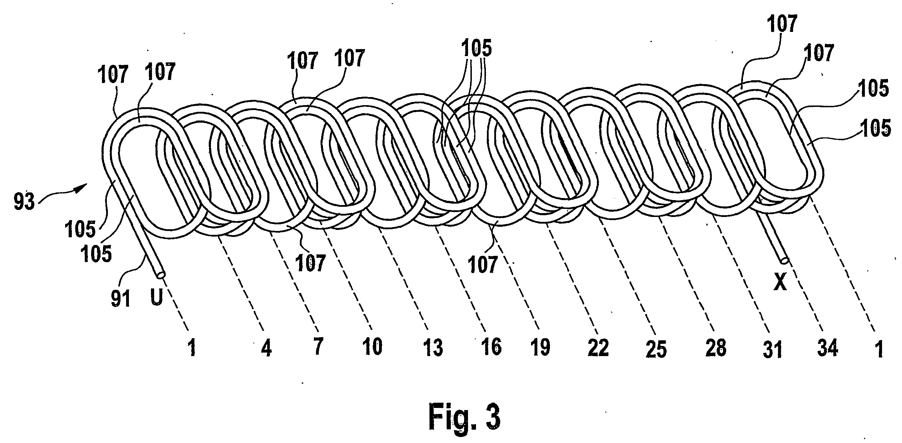

In Figur 3 ist die erste Phase 93 aus der Figur 2 in einer prinzipiell gleichen Ausführung dargestellt. Die erste Phase 93 besteht, wie auch die andern beiden Phasen, aus Nutdrahtabschnitten 105 sowie diese jeweiligen Nutdrahtabschnitte 105 verbindenden Verbindungsdrähten 107. Die unterhalb der Darstellung der ersten Phase 93 dargestellten Zahlen 1 bis 34 geben an, welche Nutdrahtabschnitte 105 in welchen Nuten mit den Nutnummer 1 bis 34 beziehungsweise 1 zu liegen kommen beziehungsweise eingelegt werden.

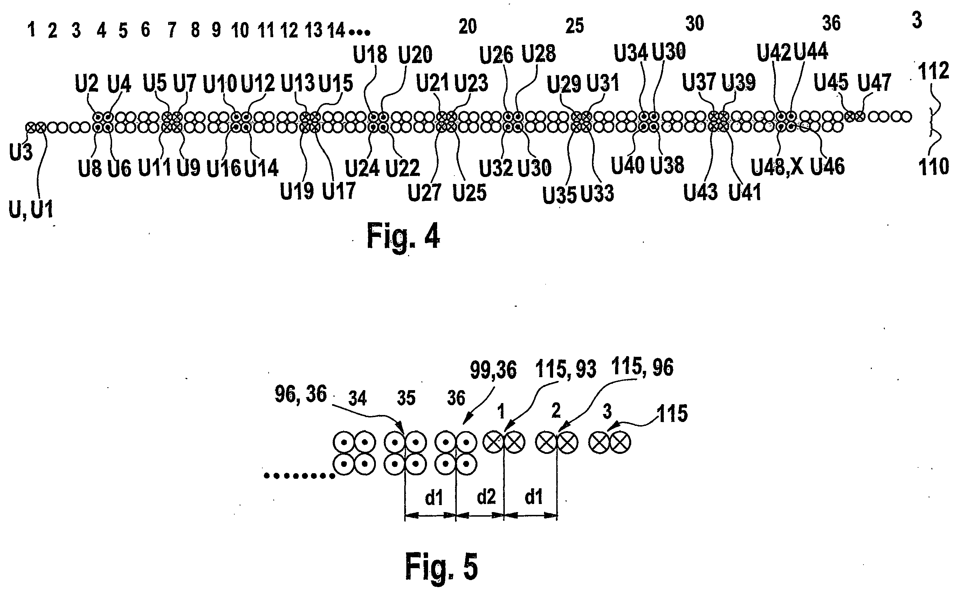

In Figur 4 ist eine Querschnittsdarstellung aller drei Phasen 93, 96 und 99, wie sie in Figur 2 dargestellt sind, abgebildet, wobei jedoch nur beispielhaft die erste Phase 93 bezeichnet ist. Die beiden anderen Phasen 96 und 99 sind analog dazu gefertigt. Die Nummern 1 bis 36 beziehungsweise 3 geben die Nutnummern an. Ausgehend von der Nut 32 mit der Nutnummer 1 wird in einem ersten Schritt vom Phasenende U aus ein Nutdrahtabschnitt 105 in einer der Nut 32 mit der Nutnummer 1 entsprechenden Position angeordnet, U1. An dem Nutdrahtabschnitt 105, U1 schließt sich der nicht dargestellte Verbindungsdraht 107 an, der bis zur Position der Nut 32 mit der Nutnummer 4 reicht. Die Wicklung wird weitergeführt mit dem Nutdrahtabschnitt 105, U2. An den Nutdrahtabschnitt 105, U2 schließt sich ein weiterer Verbindungsdraht 107 an, der mit einem Nutdrahtabschnitt 105, U3 wieder an die Position der Nut 32 mit der Nutnummer 1 gewickelt wird. Das Wicklungsschema fährt fort mit einem weiteren Verbindungsdraht 107 an eine Position in der Nut 32 mit der Nutnummer 4 über einen Nutdrahtabschnitt 105, U4, von dort wechselweise, wie in Figur 4 dargestellt, über Verbindungsdrähte 107 und Nutdrahtabschnitte 105, U5 an der Position der Nut 32 mit der Nutnummer 7 und so weiter, wie schrittweise dargestellt, bis schließlich zur Nut 32 mit der Nutnummer 42, aus der der Nutdrahtabschnitt 105, U48 wieder herausgeführt wird und das Phasenende X der ersten Phase 93 schließlich darstellt. Es wird deutlich, daß über die Nut 32 mit der Nutnummer 36 hinaus zwei Nutdrahtabschnitte 105, U45 und U47 angeordnet sind, die später wiederum in die Nut 32 mit der Nutnummer 1 und damit über die Nutdrahtabschnitte 105, U3 und U1 gelegt werden. In der Darstellung der Figur 4 wird deutlich, daß die einzelnen Nutdrahtabschnitte 105 sowohl in einer ersten Schicht 110 als auch in einer zweiten Schicht 112 zu liegen kommen. Dies gilt für alle drei Phasen 93, 96 und 99. Die erste Schicht 110 wird später im Innern der Nuten 32, die zweite Schicht 112 später im Bereich der Nutöffnungen 72 zu liegen kommen. Die Darstellung der ersten Phase 93 in Figur 3 weicht zwar von den Darstellungen in Figur 4 und Figur 2 ab, was die Lage der einzelnen Nutdrahtabschnitte 105 in den einzelnen Schichten angeht, dies ist jedoch unerheblich für das Fertigungsverfahren und schließlich auch in der elektrischen Wirkung.

In Figur 5 ist ausschnittsweise und vergrößert der Bereich der Wicklungsseiten 36 dargestellt, die in die Nuten 32 mit den Nutnummern 34, 35 und 36 eingelegt werden, sowie die einzelnen Wicklungsüberhänge 115 der drei Phasen 93, 96 und 99. Ein Abstand d1 zwischen einer Wicklungsseite 36 der zweiten Phase 96 und der Wicklungsseite 36 der dritten Phase 99 entspricht dem Abstand zweier Nuten 32 im quaderförmigen Zustand des Kerns 24, siehe auch Figur 2. Der Abstand zwischen der Wicklungsseite 36 der dritten Phase 99 und dem einzelnen und ersten Wicklungsüberhang 115 der ersten Phase 93 ist mit d2 bezeichnet. Dieser Abstand bezeichnet den Abstand zwischen der letzten in den Kern 24 vor dem Rundbiegen einzulegenden Wicklungsseite 36 und dem ersten nicht mehr in den flachen Kern 24 einlegbaren Wicklungsüberhang 115. Der Abstand d2 ist größer als der Abstand d1. Der Abstand der einzelnen Wicklungsüberhänge 115 der drei Phasen 93, 96 und 99 untereinander entspricht dem Abstand d1.

In Figur 6A ist der Querschnitt einer einzelnen Wicklungsseite 36 dargestellt. Der Querschnitt einer einzelnen Wicklungsseite 36 besteht zunächst aus den Querschnitten einzelner Nutdrahtabschnitte 105, die innerhalb einer bestimmten Hüllfläche 118 zunächst mehr oder weniger ungeordnet angeordnet sind. Gegenüber der Darstellung in den Figuren 3, 4 und 5 sind hier mehr Schleifen beziehungsweise Windungen gewickelt worden. Wie zu Figur 1 bereits erwähnt wurde, werden die Wicklungsseiten 36 vor dem Einlegen in die Nuten 32 des Kerns 24 in einem Preßwerkzeug so umgeformt, daß.die Hüllfläche 118 schließlich die Nutform 119 des Preßwerkzeugs 44 annimmt, siehe auch Figur 6B. Dazu wird die Wicklungsseite 36 zunächst lose in die Nutform 119 des Preßwerkzeugs 44 gemäß der Pfeilrichtung in Figur 6B eingelegt. Anschließend preßt ein Stempel 120 die Wicklungsseite 36 in die Nutform 119 und formt dabei die Wicklungsseite 36 derart plastisch um, daß diese bleibend als äußerste Hüllfläche 118 die Nutform 119 annimmt. Die Nutform 119 des Preßwerkzeugs 44 kann so ausgeführt sein, daß sie der Querschnittsform der Nuten 32 nach dem Biegen entspricht. In einer Variante ist vorgesehen, daß die Nutform 119 der Nutquerschnittsform der Nuten 32 abzüglich zumindest eines Anteils der Materialstärke d_{Iso} einer Isolierschicht 123 entspricht, siehe auch Figuren 6C und 6D sowie Figur 8.

Wird die Kernwicklung 40, wie in Figur 4 dargestellt, mit einem Gesamtwicklungsüberhang 102 gewickelt, so liegt der Gesamtwicklungsüberhang 102 in der Höhe der zweiten Schicht 112. Mit dem Pressen der Kernwicklung 40 im Preßwerkzeug 44 ist vorgesehen, den Gesamtwicklungsüberhang 102 gleichzeitig aus der durch die zweite Schicht 112 gebildeten Ebene hervorzuheben. Die einzelnen Wicklungsüberhänge 115 haben Unterseiten, die später zu der ersten Schicht 110 gerichtet sind. Diese Unterseiten der einzelnen Wicklungsüberhänge 115 werden durch das Pressen im Preßwerkzeug 44 über die zweite Schicht 112 hinaus angehoben und liegen auf einer Kurve K, die innerhalb des späteren Durchmessers des später runden Kerns 24 liegt.

Nach dem Pressen und Umformen der Wicklungsseiten 36 der Kernwicklung 40 wird die Kernwicklung 40 mit den Wicklungsseiten 36 in die mit dem Isolierstoff 123 ausgekleideten Nuten 32 eingelegt, Figur 8.

Die vormontierte Baugruppe, gebildet aus dem Kern 24, dem Isolierstoff 123 und der Kernwicklung 44, wird im nächsten Verfahrensschritt S4 in eine Zylinderringform 52 mit nach radial innen gerichteten Nuten 32 umgeformt. Begonnen wird dabei mit dem halben Zahn 88, der an die Nut 32 mit der Nutnummer 36 grenzt. Der halbe Zahn 88 wird in einem Werkzeug zum nächstgelegenen Zahn 76 zwischen den Nuten 32 mit den Nutnummern 35 und 36 relativ gebogen, so daß sich die Zahnköpfe 78 einander annähern und die Nutöffnungen 72 verkleinert werden. Dabei wird gleichzeitig ein Rückenabschnitt 140 zwischen dem halben Zahn 88 und dem Zahn 76 zwischen den Nuten 32 mit den Nutnummern 35 und 36 so gebogen, daß der Winkel zwischen dem Zahn 76 und dem Rückenabschnitt 140 verkleinert wird, gleiches gilt bezüglich dem halben Zahn 88. Dieser Umformvorgang wird so weit weitergeführt, bis schließlich der Zahn 76 zwischen den Nuten 32 mit den Nutnummern 3 und 4 zum Zahn 76 zwischen den Nuten 32 mit den Nutnummern 2 und 3 gebogen wird.

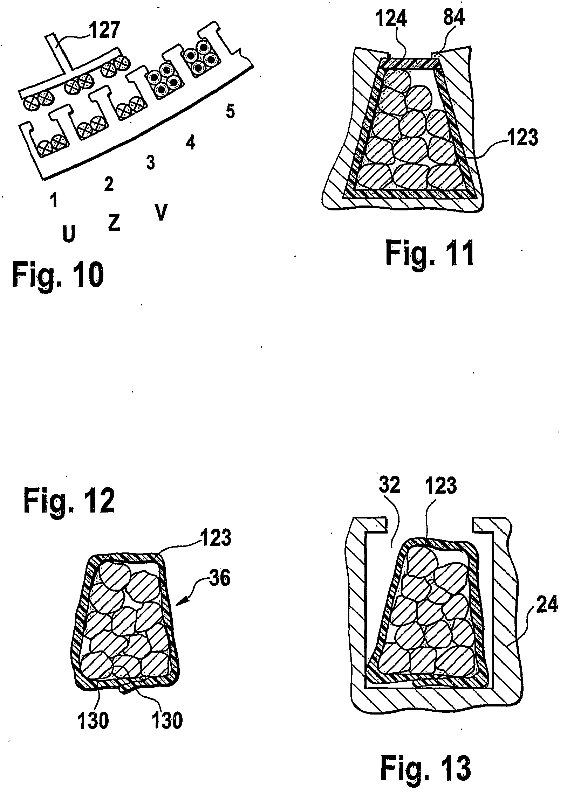

Vor dem Abschließen des Rundbiegens des Kerns 24 müssen jedoch zunächst die drei Wicklungsüberhänge 115 der drei Phasen 93, 96 und 99 in die Nuten 32 mit den Nutnummern 3, 2 und 1 eingelegt werden. Dazu werden die einzelnen Wicklungsüberhänge 115 mittels jeweils einem Stempel 126 in die Nuten 32 mit den Nutnummern 3, 2 und 1 eingelegt beziehungsweise eingeschoben. Nach einer Variante ist dies für die Wicklungsüberhänge 115 auch mittels eines einzelnen Stempels 127 möglich, siehe auch Figur 10.

Anstelle des Auskleidens einer Nut 32 mit einer Isolierschicht 123 vor dem Einlegen einer verpreßten Wicklungsseite 36 und dem anschließenden Schließen der Nut mittels einer Nutverschlußfolie 124, siehe auch Figur 11, ist es in einer Variante auch möglich, die Stempel 126 und 127 mit Nutverschlußfolien 124 zu bestücken damit die Nutverschlußfolien 124 gleichzeitig mit den Wicklungsüberhängen 115 in die Nuten 32 eingeschoben werden können. Deren Position in den Nuten 32 wird dann ebenso durch die beim Rundbiegen des Kerns 24 verengten Nutöffnungen 72 unter den Zahnleisten 84 gesichert. Eine wiederum weitere Variante sieht vor, ebenso eine zweiteilige Nutisolation aus einer Isolierschicht 123 und einer Nutverschlußfolie 124 zu verwenden. Dabei wird die bereits verpresste Kernwicklung 40 beziehungsweise deren Wicklungsseiten 36 vor dem Einlegen in den Kern 24 auf den Seiten mit der Isolierschicht 123 umlegt und gegebenenfalls beklebt, die später im Nutgrund liegt. Die Nutverschlußfolie 124 wird wie zuvor über die mit Nutverschlußfolien 124 bestückten Stempel 126 und 127 mit den Wicklungsüberhängen 115 in die Nuten 32 eingeschoben. Eine weitere Variante sieht vor, die gepreßten Wicklungsseiten 36 vor dem Einlegen in eine Nut 32 mit einer einstückigen Isolierschicht 123 zu umlegen, Figur 12. In dem dort gezeigten Ausführungsbeispiel ist die Isolierschicht 123 so um die Wicklungsseite 36 gelegt, daß sich zwei Enden 130 der Isolierschicht 123 überlappen und zwischen den beiden aneinander angrenzenden Flächen der Enden miteinander verklebt sind. Bei dieser Variante wird die gesamte Kernwicklung 40 erst nach dem Umlegen der Wicklungsseiten 36 mit der Isolierschicht 123 in die Nuten 32 des Kerns 24 gelegt, Figur 13.

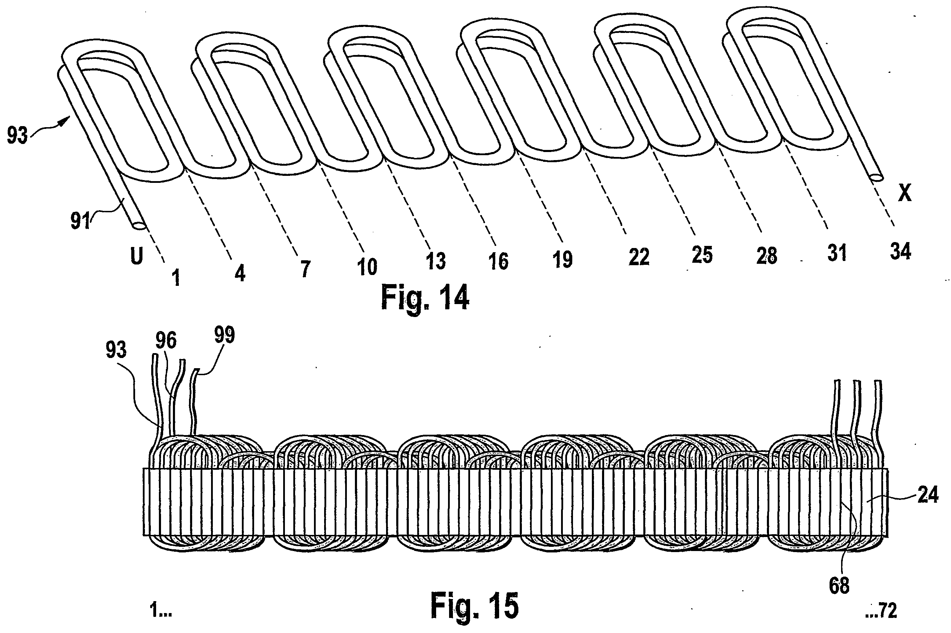

In Figur 14 ist eine einfache Schleifenwicklung räumlich dargestellt. Diese Schleifenwicklung stellt wiederum die erste Phase 93 einer Kernwicklung 40 dar. Wie bereits bei der zweischichtigen Schleifenwicklung nach Figur 3 beziehungsweise 4, wird von einer Position einer Nut 32 mit der Nutnummer 1 beginnend gewickelt, so daß eine erste Schleife in die Nuten 32 mit den Nutnummern 1 und 4 gewickelt wird und schließlich in einem bezüglich der Nutabstände Dreierschritt weitere Spulen angeordnet werden. Die erste Phase 93 endet schließlich mit dem Ende X in der Nut 32 mit der Nutnummer 34. Eine entsprechend aufgebaute zweite Phase 96 wird zur Bildung einer Kernwicklung 40 beginnend an einer Nut 32 mit der Nutnummer 2 bis zu einer Nut 32 mit der Nutnummer 35 über die erste Phase 93 gelegt, Gleiches geschieht mit einer dritten Phase 99, beginnend in der Nut mit der Nummer 3 bis zur Nut mit der Nutnummer 36. Eine derartig aufgebaute Kernwicklung 40 weist keinen Gesamtwicklungsüberhang 102 auf. In Figur 15 ist ein Kern 24 mit zweiundsiebzig Nuten dargestellt. Hier ist eine erste Phase 93, ausgehend von einer Nut 32 mit der Nutnummer 1, in die Nuten 1 und 7 gewickelt, um nach einer bestimmten Windungszahl um die Nuten 2 und 8 gewickelt zu sein. Mit einem Spulenverbindungsdraht wird schließlich nach dem Wickeln dieser zweiten Spule in die Nuten 13 und 19 eine weitere Spule beziehungsweise in die Nuten 14 und 20 und so weiter gewickelt, bis schließlich nach insgesamt acht weiteren Spulen die Phasenwicklung 93 in der Nut mit der Nummer 68 wieder der Draht aus dem Kern 24 geführt wird. Beginnend in der Nut 32 mit der Nutnummer 3 wird mit der zweiten Phase 96 begonnen, um schließlich in der Nut mit der Nummer 70 den Draht der zweiten Phase 96 wieder aus dem Kern 24 zu führen. Die Wicklung der dritten Phase 99 beginnt in der Nut mit der Nummer 5 und endet in der Nut mit der Nummer 72.

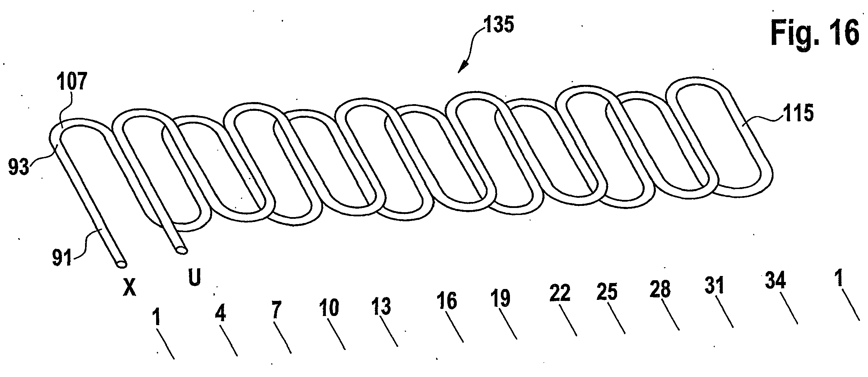

In Figur 16 ist die erste Phase 93 in Form einer verteilten Wellenwicklung 135 dargestellt. Der Draht 91 wird beginnend in der Nut 32 mit der Nutnummer 1 über einen Verbindungsdrahtabschnitt 107 in die Nut 4 geführt, von dort wiederum über einen weiteren Verbindungsdrahtabschnitt 107 in die Nut 7 und, wie in der Figur 16 gezeigt, weitergewickelt, bis ein erster Wicklungsüberhang 115 in einer der Nut 1 entsprechenden Position entsteht. Von dort wird über die Nuten 34 bis 4 zurückgewickelt. Eine zweite Phasenwicklung 96 wird in analoger Weise, von der Nut 2 ausgehend bis zur Nut 2, und einen dort gebildeten Wicklungsüberhang 115 wieder zurück zur Nut 5 gewickelt, eine dritte Phase, beginnend in der Nut 3, bis zu einem Wicklungsüberhang 115 in der Nut 32 mit der Nutnummer 3 und von dort wieder zurück in die Nut 32 mit der Nutnummer 6 gewickelt. Ein Kern 24 mit einer derartig als verteilte Wellenwicklung 35 ausgebildete Kernwicklung 40 ist ebenso für das erfindungsgemäße Verfahren geeignet.

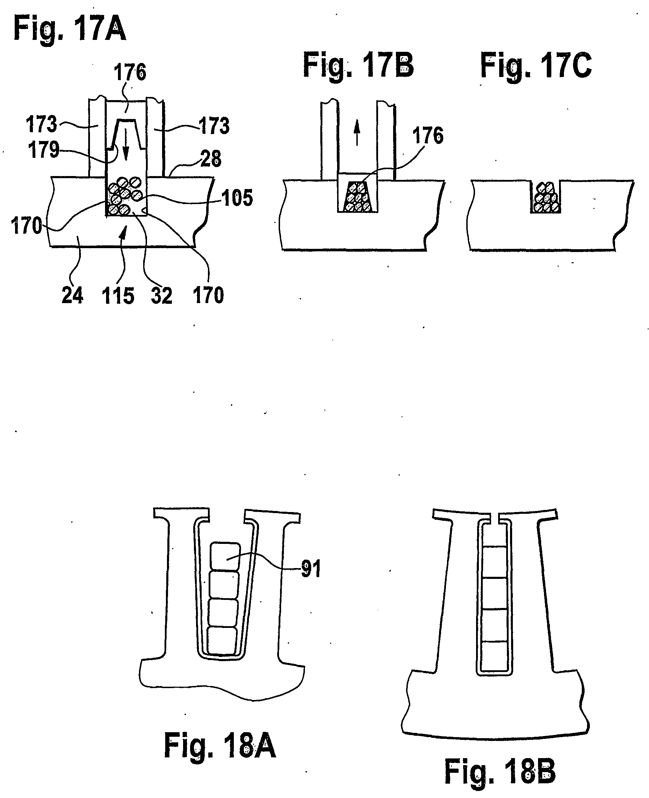

In einem weiteren Ausführungsbeispiel wird zunächst der Kern 24 bereitgestellt. In die Nuten 32 wird die Wicklung 40 entweder mit dem Draht 91 eingewickelt oder eine vorgefertigte Wicklung 40 in die Nuten 32 eingelegt. Die Wicklung 40 ist dabei noch nicht gepresst. Anschließend wird mit Nutseiten 170 einer Nut 32 fluchtend jeweils ein Führungselement 173 auf die später nach radial innen gerichtete Seite 28 des Kerns 24 aufgesetzt, so daß zwischen den Führungselementen 173 ein konstanter Abstand eingestellt ist. Ein Formstempel 176 mit einer Innenkontur 179 wird anschließend durch die beiden Führungselemente 173 geführt auf die Wicklungsseite 115 bewegt. Die einzelnen Nutdrahtabschnitte 105 der Wicklungsseite 115 werden dabei in die Innenkontur 179 gezwängt und so umgeformt, daß die Querschnitte der Wicklungsseiten 115 nach dem Umformen dem Querschnitt einer Nut 32 nach dem Rundbiegen des Kerns 24 entspricht, Figur 17A, Figur 17B.

Alternativ ist es auch möglich, jeweils einzelne in je eine Nut 32 gewickelte Nutdrahtabschnitte 105 nacheinander zu verpressen.

Vor dem Einwickeln beziehungsweise Einlegen der Wicklung 40 kann je nach Erfordernis zuvor eine Isolierschicht 123 eingebracht sein.

Nach dem Umformen wird der Formstempel 176 wieder aus der Nut 32 entfernt, die Führungselemente 173 vom Kern 24 abgehoben, Figur 17C.

Dieser Kern 24 mit Wicklung 40 wird anschließend wie in Figur 9 oder 10 gezeigt und dazu beschrieben in den weiteren Verfahrensschritten bearbeitet.

In einem weiteren Ausführungsbeispiel ist vorgesehen, Draht 91 zu verwenden, dessen größte Querschnittsabmessung größer ist als die Breite der Nutöffnung 72 in Umfangsrichtung des Kerns 24, wenn er noch in Quaderform 20 vorliegt. Wird eine solche Wicklung mit einem endlosen Draht 91, beispielsweise Draht 91 mit rechteckigem Drahtquerschnitt wie er für als Stabwicklungen bezeichnete Wicklungen verwendet wird, gewickelt, wie es bei den bereits beschriebenen drei Wicklungsausführungen durchgeführt ist, so ist ein Einlegen der Kernwicklung 40 an sich nicht möglich. Um dem abzuhelfen, wird der Kern 24 über seine Rückenfläche 60 vor dem Einlegen der Kernwicklung 40 so gebogen, daß sich die Nutöffnungen 72 erweitern und die Kernwicklung 40 einlegbar ist. Ist die Kernwicklung 40 eingelegt, wird, wie bereits beschrieben, auch hier der Kern 24 mit der Kernwicklung 40 anschließend rundgebogen und die Nutöffnungen 72 weiter verengt, siehe Figur 18B.
Gegenüber üblichen Stabwicklungen, die oftmals doppelt so viele geschweißte oder gelötete Schaltverbindungen wie Nuten 32 aufweisen, ist der Aufwand Schaltverbindungen herzustellen auf die Drahtenden U bis Z beschränkt.

Das Ausführungsbeispiel nach den Figuren 18A und 18B ist nicht auf die Verwendung von Drähten mit den entsprechenden Querschnittsabmessungen beschränkt. Vielmehr gilt dies auch für Kernwicklungen 40 mit Wicklungsseiten 36, die so gepreßt sind, daß sie auf Grund ihrer Breite in Umfangsrichtung an sich nicht in die Nutöffnung 72 einzulegen sind, sondern erst nach dem Aufweiten der Nutöffnung nach dem Biegen des Kerns 24 über seine Rückenfläche 60.

Um eine Formstabilität der gepresseten Wicklungsseiten 36 zu verbessern, kann ein sogenannter Backlack zur Fixierung der Wicklungsseiten 36 verwendet werden. Dies ist beispielsweise dadurch möglich, daß ein bereits mit einem solchen Lack behandelter Draht 91 verwendet wird, dessen Lackschicht im Presswerkzeug 44 erwärmt und zumindest einen klebrig zähen Zustand annimmt, so daß die Drähte 91 aneinander haften können und nach dem Abkühlen und Erstarren fest miteinander verbunden sind und einfach weiter zu verarbeiten sind.

Der elektrisch wirksame Nutfüllfaktor wird hier definiert als das Flächenquerschnittsverhältnis der Summe aller in einer Nut 32 angeordneten Querschnitte des elektrisch wirksamen Teils der Nutdrahtabschnitte 105 bezogen auf den Querschnitt der Nut 32 nach dem Rundbiegen.
Im Rahmen der Erfindung ist vorgesehen, einen elektrisch wirksamen Nutfüllfaktor von mindestens 55% zu verwirklichen. Diese Untergrenze stellt für die elektrische Wirksamkeit ein Mindesterfordernis dar. Eine Obergrenze von 75% ist technisch gerade noch möglich. Ein höherer Nutfüllfaktor führt zu so hohen Kräften beim Pressen der Wicklungsseiten 36, daß eine Lackschicht auf den Drähten 91 beschädigt wird und so Kurzschlüsse in der Kernwicklung 40 diese unbrauchbar machen. Ein guter Kompromiss unter Berücksichtigung der Fertigungstoleranzen und technischer Machbarkeit ist bei einem Nutfüllfaktor in einem Bereich zwischen 57% und 70% gegeben.

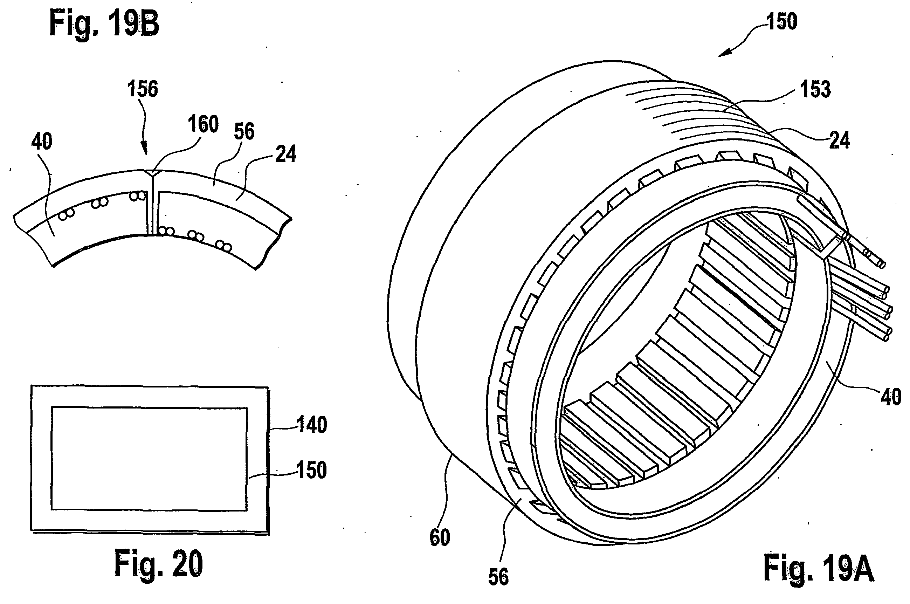

In Figur 19A ist ein Ständer 150 aus einem aus Lamellen 153 aufgebauten Kern 24 mit einer einfachen Schleifenwicklung als Kernwicklung 40 dargestellt. In Figur 18B ist eine Fügestelle 156, gebildet aus den beiden aneinandergelegten Endflächen 68 des rundgebogenen Kerns 24, dargestellt. Um den rundgebogenen Kern 24 nicht um den elastischen Anteil der Biegung auseinanderklaffen zu lassen, ist an der Fügestelle 156 eine Schweißnaht 160 gesetzt, um beide Enden 61 des Kerns 24 miteinander fest zu verbinden.

In Figur 20 ist eine symbolische Darstellung einer elektrischen Maschine 140 mit dem erfindungsgemäßen Ständer 150 dargestellt.

## Patentansprüche

1. Verfahren zum Herstellen eines magnetisch erregbaren Kerns (24) mit einer Kernwicklung (40) für eine elektrische Maschine, wonach in einem Verfahrensschritt (S1) der eine im wesentlichen Quaderform (20) mit auf einer Seite parallel verlaufende Nuten (32) aufweisender Kern (24) bereitgestellt wird, in dessen Nuten (32) in einem Verfahrensschritt (S2) die Kernwicklung (40) mit ihren Wicklungsseiten (36) eingelegt und darauffolgend in einem Verfahrensschritt (S3) der Kern (24) samt Kernwicklung (40) in eine Zylinderringform (52) mit nach radial innen gerichteten Nuten (32) umgeformt wird, **dadurch gekennzeichnet, dass** jeweils alle Wicklungsseiten (36), die in je eine Nut (32) eingelegt werden, vor dem Einlegen in die Nut (32) in einem Werkzeug (44) in eine Nutform (119) gepresst und umgeformt werden.

2. Verfahren nach Anspruch 1, **dadurch gekennzeichnet, dass** der Kern (24) so gefertigt wird, dass an seinen miteinander zu fügenden Enden (61) in Umfangsrichtung jeweils ein halber Zahn (88) ausgebildet ist.

3. Verfahren nach einem der vorhergehenden Ansprüche, **dadurch gekennzeichnet, dass** die Wicklungsseiten (36) der Kernwicklung (40) in eine Nutform (119) gepresst werden, die einer Querschnittsform der Nuten (32) des Kerns (24) entspricht.

4. Verfahren nach Anspruch 1 und 2, **dadurch gekennzeichnet, dass** die Wicklungsseiten (36) der Kernwicklung (40) in eine Nutform (119) gepresst werden, die der Querschnittsform der Nuten (32) des Kerns (24) abzüglich zumindest eines Anteils einer Dicke (d_{ISO}) einer Isolierschicht (123) entspricht.

5. Verfahren nach einem der vorhergehenden Ansprüche, **dadurch gekennzeichnet, dass** die Kernwicklung (40) mit zumindest einem Wicklungsüberhang (115) gewickelt wird.

6. Verfahren nach Anspruch 5, **dadurch gekennzeichnet, dass** ein Abstand (d2) einer überhängenden Wicklunsseite (36) zu einer benachbarten nicht überhängenen Wicklungsseite (36) größer gewickelt wird, als ein Abstand (d1) zwischen zwei Nuten (32) ist.

7. Verfahren nach Anspruch 6, **dadurch gekennzeichnet, dass** durch das Pressen der Wicklungsseiten (36) in die Nutform (119) die zumindest eine überhängende Wicklungsseite (36) aus einer durch die nicht überhängenden Wicklungsseiten (36) gebildeten Ebene bleibend herausgehoben wird.

8. Verfahren nach einem der vorhergehenden Ansprüche, **dadurch gekennzeichnet, dass** die Kernwicklung (40) als zweischichtige Schleifenwicklung ausgeführt wird.

9. Verfahren nach einem der vorhergehenden Ansprüche, **dadurch gekennzeichnet, dass** der Kern (24) vor dem Einlegen der Kernwicklung (40) in die Nuten (32) über seinen Kernrücken (89) so gebogen wird, dass Nutöffnungen (72) zum Einlegen der Wicklungsseiten (36) erweitert werden.

10. Verfahren nach einem der vorhergehenden Ansprüche 1 bis 4, **dadurch gekennzeichnet, dass** die Kernwicklung (40) als einfache einschichtige Schleifenwicklung ausgeführt wird.

11. Verfahren nach einem der vorhergehenden Ansprüche 1 bis 9, **dadurch gekennzeichnet, dass** ein Wicklungsüberhang (115) vor dem Abschluss des Biegens des Kerns (24) in die Zylinderringform (52) in die zumindest eine Nut (32) eingelegt wird.

12. Verfahren nach einem der vorhergehenden Ansprüche, **dadurch gekennzeichnet, dass** nach dem Biegen des Kerns (24) in die Zylinderringform (52) die Enden (61) miteinander stoffschlüssig verbunden werden.

13. Verfahren zum Herstellen eines magnetisch erregbaren Kerns (24) mit einer Kernwicklung (40) für eine elektrische Maschine, wonach in einem Verfahrensschritt (S1) der eine im wesentlichen Quaderform (20) mit auf einer Seite parallel verlaufende Nuten (32) aufweisender Kern (24) bereitgestellt wird, in dessen Nuten (32) in einem Verfahrensschritt (S2) die Kernwicklung (40) mit ihren Wicklungsseiten (36) eingelegt und darauffolgend in einem Verfahrensschritt (S3) der Kern (24) samt Kernwicklung (40) in eine Zylinderringform (52) mit nach radial innen gerichteten Nuten (32) umgeformt wird, **dadurch gekennzeichnet, dass** jeweils alle Wicklungsseiten (36), die in je eine Nut (32) eingelegt werden, nach dem Einlegen in die Nut (32) mittels eines Formstempels (176) so umgeformt werden, daß alle Wicklungsseiten insgesamt so umgeformt sind, daß ihre Außenkontur einer Nut (32) des rundgebogenen Kerns (24) entspricht.

14. Magnetisch erregbarer Kern (24) mit einer Kernwicklung (40) für eine elektrische Maschine (140) hergestellt nach einem der vorhergehenden Ansprüche.

15. Magnetisch erregbarer Kern (24) mit einer Kernwicklung (40) für eine elektrische Maschine (140) nach Anspruch 14, **dadurch gekennzeichnet, daß** der Kern (24) eine Fügestelle (156) aufweist, an der seine zwei Endflächen (68) miteinander verbunden sind.

16. Magnetisch erregbarer Kern (24) mit einer Kernwicklung (40) für eine elektrische Maschine (140) nach Anspruch 14 oder 15, **dadurch gekennzeichnet, daß** beide Enden (61) miteinander stoffschlüssig verbunden sind.

17. Magnetisch erregbarer Kern (24) mit einer Kernwicklung (40) für eine elektrische Maschine (140) nach einem der Ansprüche 14 bis 16, **dadurch gekennzeichnet, daß** beiderseits der Fügestelle (156) jeweils zumindest ein Kernwicklungsanschluß angeordnet ist.

18. Ständer (150) für eine elektrische Maschine (140), der ein nach einem der vorhergehenden Ansprüche 14 bis 17 hergestellter magnetisch erregbarer Kern (24) mit einer Kernwicklung (40) ist.

19. Elektrische Maschine (140), insbesondere Generator, mit einem Ständer (150) nach Anspruch 18.

## Claims

1. Method for producing a core (24) which can be excited magnetically and has a core winding (40) for an electrical machine, according to which, in a method step (S1), the one core (24) is produced which essentially has a cuboid shape (20) with slots (32) running parallel on one side and in whose slots (32), in a method step (S2), the winding sides (36) of the core winding (40) are inserted and then, in a method step (S3), the core (24) together with the core winding (40) is formed into a cylindrical annular shape (52) with slots (32) pointing radially inwards, **characterized in that** all the winding sides (36), which are inserted into a respective slot (32), are each pressed and formed in a tool (44) into a slot shape (119) before being inserted into the slot (32).

2. Method according to Claim 1, **characterized in that** the core (24) is manufactured such that a half tooth (88) is formed in the circumferential direction on each of its ends (61) which are to be joined to one another.

3. Method according to one of the preceding claims, **characterized in that** the winding sides (36) of the core winding (40) are pressed into a slot shape (119) which corresponds to the cross-sectional shape of the slots (32) and of the core (24).

4. Method according to Claims 1 and 2, **characterized in that** the winding sides (36) of the core winding (40) are pressed into a slot shape (119) which corresponds to the cross-sectional shape of the slots (32) of the core (24) minus at least one element with the thickness (d_{ISO}) of an insulating layer (123).

5. Method according to one of the preceding claims, **characterized in that** the core winding (40) is wound with at least one winding overhang (115).

6. Method according to Claim 5, **characterized in that** the distance (d2) between an overhanging winding side (36) and an adjacent winding side (36) which is not overhanging is wound such that it is greater than the distance (d1) between two slots (32).

7. Method according to Claim 6, **characterized in that** the pressing of the winding sides (36) into the slot shape (119) results in the at least one overhanging winding side (36) being permanently raised out of a plane formed by the winding sides (36) which are not overhanging.

8. Method according to one of the preceding claims, **characterized in that** the core winding (40) is in the form of a two-layer lap winding.

9. Method according to one of the preceding claims, **characterized in that**, before the insertion of the core winding (40) into the slots (32), the core back (89) of the core (24) is bent such that slot openings (72) are widened for insertion of the winding sides (36).

10. Method according to one of the preceding Claims 1 to 4, **characterized in that** the core winding (40) is in the form of a single, single-layer lap winding.

11. Method according to one of the preceding Claims 1 to 9, **characterized in that** a winding overhang (115) is inserted into the at least one slot (32) before completion of the process of bending the core (24) into the cylindrical annular shape (52).

12. Method according to one of the preceding claims, **characterized in that**, once the core (24) has been bent into the cylindrical annular shape (52), the ends (61) are connected to one another by techniques such as welding, soldering or bonding.

13. Method for producing a core (24) which can be excited magnetically and has a core winding (40) for an electrical machine, according to which, in a method step (S1), the one core (24) is produced which essentially has a cuboid shape (20) with slots (32) running parallel on one side and in whose slots (32), in a method step (S2), the winding sides (36) of the core winding (40) are inserted and then, in a method step (S3), the core (24) together with the core winding (40) is formed into a cylindrical annular shape (52) with slots (32) pointing radially inwards, **characterized in that** all the winding sides (36) which are each inserted into a slot (32) are each shaped by means of a die (176) once they have been inserted into the slot (32), such that all the winding sides are shaped overall such that their external contour corresponds to a slot (32) in the bent-around core (24).

14. Core (24) which can be excited magnetically and has a core winding (40) for an electrical machine (140), produced according to one of the preceding claims.

15. Core (24) which can be excited magnetically and has a core winding (40) for an electrical machine (140) according to Claim 14, **characterized in that** the core (24) has a joint (156) at which its two end surfaces (68) are connected to one another.

16. Core (24) which can be excited magnetically and has a core winding (40) for an electrical machine (140) according to Claim 14 or 15, **characterized in that** the two ends (61) are connected to one another by techniques such as welding, soldering or bonding.

17. Core (24) which can be excited magnetically and has a core winding (40) for an electrical machine (140) according to one of Claims 14 to 16, **characterized in that** at least one core winding connection is arranged on each of the two sides of the joint (156).

18. Stator (150) for an electrical machine (140), which is a core (24) which is produced according to one of the preceding Claims 14 to 17, can be excited magnetically and has a core winding (40).

19. Electrical machine (140), in particular a generator, having a stator (150) according to Claim 18.

## Revendications

1. Procédé de production d'un noyau à excitation magnétique (24) comprenant un enroulement de noyau (40) pour une machine électrique, dans lequel, dans une étape de procédé (S1), le noyau (24) présentant essentiellement une forme parallélépipédique (20) avec des rainures (32) s'étendant parallèlement sur une face est fourni, dans une étape de procédé (S2), l'enroulement de noyau (40) est introduit avec ses côtés d'enroulement (36) dans les rainures (32) du noyau et ensuite, dans une étape de procédé (S3), le noyau (24) avec l'enroulement de noyau (40) est façonné en forme de bague cylindrique (52) avec des rainures (32) orientées radialement vers l'intérieur, **caractérisé en ce qu'**à chaque fois tous les côtés d'enroulement (36) qui sont introduits dans une rainure respective (32) sont pressés et façonnés dans un outil (44) pour prendre une forme de rainure (119) avant l'introduction dans la rainure (32).

2. Procédé selon la revendication 1, **caractérisé en ce que** le noyau (24) est fabriqué de telle sorte qu'au niveau de ses extrémités (61) devant être assemblées l'une à l'autre, est à chaque fois réalisée une demi-dent (88) dans la direction périphérique.

3. Procédé selon l'une quelconque des revendications précédentes, **caractérisé en ce que** les côtés d'enroulement (36) de l'enroulement de noyau (40) sont pressés pour prendre une forme de rainure (119) qui correspond à une forme en section transversale des rainures (32) du noyau (24).

4. Procédé selon les revendications 1 et 2, **caractérisé en ce que** les côtés d'enroulement (36) de l'enroulement de noyau (40) sont pressés pour prendre une forme de rainure (119) qui correspond à la forme en section transversale des rainures (32) du noyau (24) déduction faite d'au moins une partie d'une épaisseur (d_{ISO}) d'une couche d'isolation (123).

5. Procédé selon l'une quelconque des revendications précédentes, **caractérisé en ce que** l'enroulement de noyau (40) est enroulé avec au moins un dépassement d'enroulement (115).

6. Procédé selon la revendication 5, **caractérisé en ce qu'**une distance (d2) d'un côté d'enroulement (36) qui dépasse à un côté d'enroulement (36) adjacent qui ne dépasse pas est plus grande qu'une distance (d1) entre deux rainures (32).

7. Procédé selon la revendication 6, **caractérisé en ce qu'**en pressant les côtés d'enroulement (36) dans la forme de rainure (119), l'au moins un côté d'enroulement (36) qui dépasse est soulevé de manière permanente hors d'un plan formé par les côtés d'enroulement (36) qui ne dépassent pas.

8. Procédé selon l'une quelconque des revendications précédentes, **caractérisé en ce que** l'enroulement de noyau (40) est réalisé sous forme d'enroulement en boucles à deux couches.

9. Procédé selon l'une quelconque des revendications précédentes, **caractérisé en ce que** le noyau (24), avant l'introduction de l'enroulement de noyau (40) dans les rainures (32), est cintré sur son dos de noyau (89) de telle sorte que des ouvertures de rainure (72) soient élargies pour l'introduction des côtés d'enroulement (36).

10. Procédé selon l'une quelconque des revendications précédentes 1 à 4, **caractérisé en ce que** l'enroulement de noyau (40) est réalisé sous forme d'enroulement à boucles simple à une seule couche.

11. Procédé selon l'une quelconque des revendications précédentes 1 à 9, **caractérisé en ce qu'**un dépassement d'enroulement (115) est introduit dans l'au moins une rainure (32) avant la fin du cintrage du noyau (24) à la forme d'une bague cylindrique (52).

12. Procédé selon l'une quelconque des revendications précédentes, **caractérisé en ce qu'**après le cintrage du noyau (24) à la forme de bague cylindrique (52), les extrémités (61) sont raccordées l'une à l'autre par engagement par liaison de matière.

13. Procédé de fabrication d'un noyau à excitation magnétique (24) comprenant un enroulement de noyau (40) pour une machine électrique, dans lequel, dans une étape de procédé (S1), le noyau (24) présentant essentiellement une forme parallélépipédique (20) avec des rainures (32) s'étendant parallèlement sur une face est fourni, dans une étape de procédé (S2), l'enroulement de noyau (40) est introduit avec ses côtés d'enroulement (36) dans les rainures (32) du noyau et ensuite, dans une étape de procédé (S3), le noyau (24) avec l'enroulement de noyau (40) est façonné en forme de bague cylindrique (52) avec des rainures (32) orientées radialement vers l'intérieur, **caractérisé en ce qu'**à chaque fois tous les côtés d'enroulement (36) qui sont introduits dans une rainure respective (32) sont façonnés après leur introduction dans la rainure (32) au moyen d'un poinçon de formage (176) de telle sorte que tous les côtés d'enroulement soient façonnés dans l'ensemble de telle sorte que leur contour extérieur corresponde à une rainure (32) du noyau (24) cintré en une forme ronde.

14. Noyau à excitation magnétique (24) comprenant un enroulement de noyau (40) pour une machine électrique (140), fabriqué selon l'une quelconque des revendications précédentes.

15. Noyau à excitation magnétique (24) comprenant un enroulement de noyau (40) pour une machine électrique (140) selon la revendication 14, **caractérisé en ce que** le noyau (24) présente une zone d'assemblage (156) au niveau de laquelle ses deux faces d'extrémité (68) sont raccordées l'une à l'autre.

16. Noyau à excitation magnétique (24) comprenant un enroulement de noyau (40) pour une machine électrique (140) selon la revendication 14 ou 15, **caractérisé en ce que** les deux extrémités (61) sont raccordées l'une à l'autre par engagement par liaison de matière.

17. Noyau à excitation magnétique (24) comprenant un enroulement de noyau (40) pour une machine électrique (140) selon l'une quelconque des revendications 14 à 16, **caractérisé en ce que** de chaque côté de la zone d'assemblage (156) est à chaque fois disposé au moins un raccord d'enroulement de noyau.

18. Stator (150) pour une machine électrique (140), qui est un noyau (24) à excitation magnétique comprenant un enroulement de noyau (40), fabriqué selon l'une quelconque des revendications précédentes 14 à 17.

19. Machine électrique (140), en particulier générateur, comprenant un stator (150) selon la revendication 18.
